# EUROPÄISCHE PATENTANMELDUNG

(11) **EP 1 186 486 A2**
(43) Veröffentlichungstag der Anmeldung: **13.03.2002**
(21) Anmeldenummer: 01120222.3
(22) Anmeldetag: 23.08.2001
(51) Int. Cl.: B60R 21/26

(54) **Auslöseeinrichtung für den Gasgenerator eines Kraftfahrzeug-Airbags**

(30) Priorität: 09.09.2000 DE 10044616
(71) Anmelder: Bayerische Motoren Werke Aktiengesellschaft, 80809 München (DE)
(72) Erfinder: Seidl, Josef, 84130 Dingolfing (DE)

(57) **Zusammenfassung**

Die Erfindung betrifft eine Auslöseeinrichtung für den Gasgenerator eines Kraftfahrzeug-Airbags mit einem mechanischen Beschleunigungssensor, der mit der Zündeinrichtung (14) des Gasgenerators gekuppelt ist. Es ist ein beweglich gelagerter erster Körper (17) mit träger Masse und ein beweglich gelagerter und mit Staudruck des Fahrtwindes beaufschlagbarer zweiter Körper (12) vorgesehen, wobei die beiden Körper derart verbunden sind, daß die Staudruck- und Verzögerungskräfte entgegengesetzt gerichtet sind.

## Beschreibung

Die Erfindung betrifft eine Auslöseeinrichtung für den Gasgenerator eines Kraftfahrzeug-Airbags mit einem mechanischen Beschleunigungssensor, der mit der Zündeinrichtung des Gasgenerators gekuppelt ist.

Bei einer bekannten Auslöseeinrichtung dieser Art wird der Beschleunigungssensor von einem Pendel gebildet, das bei einer Verzögerung des Kraftfahrzeugs einen Zündbolzen freigibt. Da bei dieser bekannten Auslöseeinrichtung ausschließlich Verzögerungskräfte berücksichtigt werden, kann es zu einer Fehlauslösung kommen. Die Auslöseeinrichtung kann nämlich nicht unterscheiden, ob die auf das Pendel ausgeübte Verzögerungskraft von einem Aufprall des Kraftfahrzeugs auf ein Hindernis oder lediglich vom Überfahren einer starken Bodenunebenheit herrührt. Wenn der Airbag infolge einer Erschütterung aufgeblasen wird, während sich das Fahrzeug in voller Fahrt befindet, besteht aber die Gefahr, daß der Fahrer die Herrschaft über das Fahrzeug verliert.

Der Erfindung liegt die Aufgabe zugrunde, eine gattungsgemäße Auslöseeinrichtung zu schaffen, die bei höherer Geschwindigkeit des Fahrzeugs daran gehindert ist, die Zündeinrichtung des Gasgenerators zu betätigen.

Eine diesem Erfordernis entsprechende Auslöseeinrichtung ist gekennzeichnet durch einen beweglich gelagerten ersten Körper mit träger Masse und einen beweglich gelagerten und mit dem Staudruck des Fahrtwindes beaufschlagbaren zweiten Körper, wobei die beiden Körper derart verbunden sind, daß die Staudruck- und Verzögerungskräfte entgegengesetzt gerichtet sind. Wenn das Kraftfahrzeug eine Bodenunebenheit überfährt und dadurch auf den ersten Körper eine Verzögerungskraft ausgeübt wird, dann wird eine Betätigung der Zündeinrichtung verhindert, weil der auf den zweiten Körper ausgeübte Staudruck überwiegt. Wenn das Kraftfahrzeug jedoch auf ein Hindernis aufprallen sollte, so daß die Fahrgeschwindigkeit und damit der Staudruck rapide abnimmt, dann überwiegt die auf den ersten Körper ausgeübte Verzögerungskraft, so daß die Zündeinrichtung betätigt wird. Dadurch, daß bei der erfindungsgemäßen Auslöseeinrichtung neben der Verzögerung des Kraftfahrzeugs auch dessen Geschwindigkeit berücksichtigt wird, werden Fehlauslösungen im normalen Fahrbetrieb verhindert, wobei aber die Betätigung der Zündeinrichtung gewährleistet ist, falls das Kraftfahrzeug auf ein Hindernis aufprallen sollte.

Bei einer in konstruktiver Hinsicht vorteilhaften Weiterbildung der Erfindung ist vorgesehen, daß der erste und der zweite Körper zu einem einheitlichen Körper zusammengefaßt sind, der um eine quer zur Fahrtrichtung angeordnete Achse verschwenkbar ist. Dieser Konstruktionsgedanke kann beispielsweise in der Weise verwirklicht werden, daß der Körper als Windschutzscheibe ausgebildet ist. Die Kupplung der Windschutzscheibe mit der Zündeinrichtung des Gasgenerators kann dadurch bewirkt werden, daß die Windschutzscheibe einen zur Drehachse versetzt angeordneten Befestigungsbereich hat, der in der Gebrauchsstellung einen vorgespannten Zündbolzen des Gasgenerators blockiert.

Um eine Fehlauslösung im Stillstand des Kraftfahrzeugs zu verhindern, beispielsweise beim Waschen der Windschutzscheibe, ist vorgesehen, daß diese durch Scherbolzen in der Gebrauchsstellung gesichert ist.

Ein bevorzugtes Ausführungsbeispiel der Erfindung ist in der Zeichnung dargestellt und wird nachfolgend näher erläutert. Es zeigt:
Fig. 1 eine schematische Seitenansicht drehbar gelagerten Windschutzscheibe eines Motorrades, und
Fig. 2 einen Schnitt durch einen Betätigungsbereich der Windschutzscheibe parallel zu deren Drehachse.

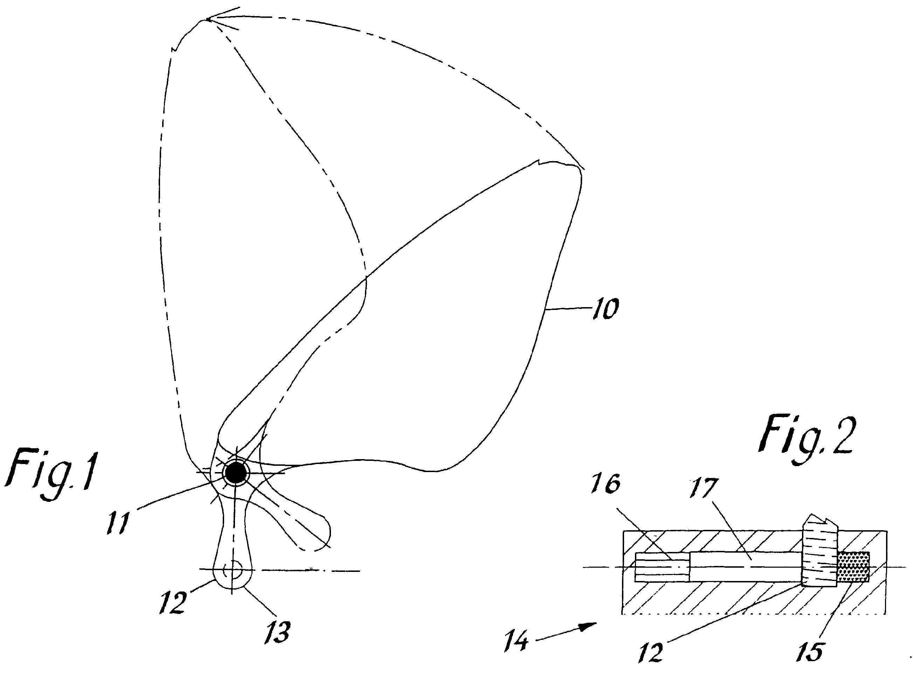

In Fig. 1 der Zeichnung ist eine Windschutzscheibe 10 eines Motorrades schematisch dargestellt. Da eine solche Windschutzscheibe häufig in eine Verkleidung des Motorrades integriert ist, sprich man auch von einer Verkleidungsscheibe. Die Verkleidungsscheibe 10 ist an ihrem vorderen unteren Rand mit dem Motorrad oder dessen Verkleidung schwenkbar verbunden. Die nicht näher dargestellte Lagerung der Verkleidungsscheibe 10 ist dabei so ausgebildet, daß deren Schwenkachse 11 horizontal und zur Fahrrichtung rechtwinklig ist. Die Verkleidungsscheibe 10 ist seitlich nach unten über die Schwenkachse 1 hinaus verlängert, um einen Betätigungsbereich 12 zu bilden. Die Verkleidungsscheibe 10 ist in der mit einer durchgezogenen Linie dargestellten Gebrauchsstellung durch einen den Betätigungsbereich 12 durchsetzenden Scherbolzen 13 gesichert.

Fig. 2 zeigt einen parallel zur Schwenkachse 11 gelegten Schnitt durch eine Zündeinrichtung 14 für den (nicht gezeigten) Gasgenerator eines Airbags. In einer Bohrung sind eine Zündpille 15 und ein mit der Kraft einer Druckfeder 16 vorgespannter Zündbolzen 17 angeordnet. Der Betätigungsbereich 12 der Verkleidungsscheibe 10 ragt in einen Querschlitz der Zündeinrichtung 14 hinein und hält den Zündbolzen 17 im Abstand von der Zündpille 15. Die Darstellung nach Fig. 2 entspricht der Gebrauchsstellung der Verkleidungsscheibe 10, in der der Zündbolzen 17 blockiert ist.

Wenn sich das Motorrad in Fahrt befindet, dann übt der Fahrtwind auf die Verkleidungsscheibe 10 einen nach rechts gerichteten Staudruck aus. Dieser Staudruck überwiegt die im normalen Fahrbetrieb möglicherweise auftretenden Verzögerungskräfte, die bestrebt sind, die Verkleidungsscheibe 10 im Gegenuhrzeigersinn um die Schwenkachse 11 zu verschwenken. Durch den auf die Verkleidungsscheibe 10 einwirkenden Staudruck wird somit eine Fehlauslösung der Zündpille 15 verhindert. Falls das Motorrad jedoch gegen ein Hindernis prallen sollte, dann nimmt der auf die Verkleidungsscheibe 10 ausgeübte Staudruck rapide ab, während infolge der Verzögerung des Motorrades gleichzeitig eine große Trägheitskraft in Fahrtrichtung auf die Verkleidungsscheibe 10 ausgeübt wird. Sobald diese durch einen Pfeil angedeutete Verzögerungskraft den Staudruck überwindet, wird die Verkleidungsscheibe 10 im Gegenuhrzeigersinn um die Schwenkachse 11 in die mit einer strichpunktierten Linie gezeigte Stellung verschwenkt. Infolge dieser Verschwenkung der Verkleidungsscheibe 10 gibt deren Betätigungsbereich 12 den Zündbolzen 17 frei. Unter der Kraft der vorgespannten Druckfeder 16 wird der Zündbolzen 17 demzufolge in der Zündeinrichtung 14 verschoben, so daß er auf die Zündpille 15 auftrifft und diese zündet. Ein (nicht gezeigter) Airbag wird daher aufgeblasen, um den Fahrer abzufangen. Da die Ausbildung eines Airbags und des zugehörigen Gasgenerators allgemein bekannt ist, kann auf eine nähere Erläuterung verzichtet werden.

Der Scherbolzen 13 ist so bemessen, daß er einerseits eine Verschwenkung der Verkleidungsscheibe 10 bei geringen Kräften, beispielsweise beim Reinigen derselben verhindert, daß er aber andererseits unter den bei einem Unfall auftretenden Trägheitskräften zerstört wird.

Wenngleich die Auslöseeinrichtung vorstehend in Verbindung mit einem Motorrad erläutert wurde, so ist für den Fachmann erkennbar, daß das Konstruktionsprinzip auch bei einem Personenkraftwagen anwendbar ist. Anstelle einer schwenkbar gelagerten Windschutzscheibe könnte auch eine gesonderte Stauklappe vorgesehen werden.

### Bezugszeichenliste:

- 10: Verkleidungsscheibe
- 11: Schwenkachse
- 12: Betätigungsbereich
- 13: Scherbolzen
- 14: Zündeinrichtung
- 15: Zündpille
- 16: Druckfeder
- 17: Zündbolzen

## Patentansprüche

1. Auslöseeinrichtung für den Gasgenerator eines Kraftfahrzeug-Airbags mit einem mechanischen Beschleunigungssensor, der mit der Zündeinrichtung des Gasgenerators gekuppelt ist, **gekennzeichnet durch** einen beweglich gelagerten ersten Körper mit träger Masse und einen beweglich gelagerten und mit dem Staudruck des Fahrtwindes beaufschlagbaren zweiten Körper, wobei die beiden Körper derart verbunden sind, daß die Staudruck- und Verzögerungskräfte entgegengesetzt gerichtet sind.

2. Auslöseeinrichtung nach Anspruch 1, **dadurch gekennzeichnet, daß** der erste und der zweite Körper zu einem einheitlichen Körper (10) zusammengefaßt sind, der um eine quer zur Fahrtrichtung angeordnete Achse (11) verschwenkbar ist.

3. Auslöseeinrichtung nach Anspruch 2, **dadurch gekennzeichnet, daß** der Körper (10) als Windschutzscheibe ausgebildet ist.

4. Auslöseeinrichtung nach Anspruch 3, **dadurch gekennzeichnet, daß** die Windschutzscheibe (10) einen zur Schwenkachse (11) versetzt angeordneten Betätigungsbereich (12) hat, der in der Gebrauchsstellung einen vorgespannten Zündbolzen (17) der Zündeinrichtung (14) blockiert.

5. Auslöseeinrichtung nach Anspruch 4, **dadurch gekennzeichnet, daß** die Windschutzscheibe (10) durch einen Scherbolzen (13) in der Gebrauchsstellung gesichert ist.
